# EUROPEAN PATENT SPECIFICATION

(11) **EP 1 553 743 B1**
(45) Date of publication and mention of the grant of the patent: **12.04.2006**
(21) Application number: 04290024.1
(22) Date of filing: 06.01.2004
(51) Int. Cl.: H04L 27/26

(54) **Multi-carrier transceiver with reliable online reconfiguration**
Mehrträgerempfänger mit zuverlässiger Onlineneukonfiguration
Emetteur-récepteur multi-porteurs avec reconfiguration en ligne fiable

(43) Date of publication of application: 13.07.2005
(73) Proprietor: ALCATEL, 75008 Paris (FR)
(72) Inventor: Schelstraete, Sigurd Jan Maria, 2900 Schoten (BE); Defoort, Frank Cyriel Michel, 9150 Kruibeke-Bazel (BE)
(74) Representative: Narmon, Gisèle Marie Thérèse

(56) References cited:
- US-A1- 2002 080 824
- "NETWORK AND CUSTOMER INSTALLATION INTERFACES - ASYMMETRIC DIGITAL SUBSCRIBER LINE (ADSL) METALLIC INTERFACE" ANSI T1.413-1998. REVISION OF ANSI T1.413-1995. NETWORK AND CUSTOMER INSTALLATION INTERFACES - ASYMMETRIC DIGITAL SUBSCRIBER LINE (ADSL) METALLIC INTERFACE, 11 November 1998 (1998-11-11), pages A-C,I, XP000955261

## Description

The present invention relates to a method and means in multi-carrier transceivers for online reconfiguration in the presence of changing noise and/or changing line conditions. The online reconfiguration function will update the bit loading and/or the transmit power of the different carriers when for instance the reception quality of certain carriers degrade, in order to preserve optimal performance.

Such an online reconfiguration mechanism is already known from *section 10 of the ANSI T1E1.413-1998 Specification entitled "Network and Customer Installation Interfaces - Asymmetric Digital Subscriber Line (ADSL) Metallic Interface".* Therein, online updating the number of bits assigned to carriers (named subcarriers in T1E1.413-1998) and changing the transmit energy of carriers, is called "Bit Swapping". The known ADSL bit swap process makes use of the overhead control channel or so called AOC channel (Auxiliary Overhead Channel) to convey the bit swap request and bit swap acknowledge messages between the multi-carrier transceivers whose bit and power allocations will be updated as a result of the changing noise or line conditions. The AOC bytes are carried as overhead bytes in the ADSL frame structure. As such, they are also modulated on the carriers and therefore also vulnerable to changing noise and/or line conditions. If the noise is severe on the carriers that convey the AOC bytes, the bitswap commands themselves may be impaired. In that case, the multi-carrier transceiver will be unable to successfully complete online reconfiguration.

For implementations of ADSL compliant with the ANSI T1E1.413-1998 Specification, the robustness problem of the online reconfiguration mechanism is even worse because the AOC bytes are modulated on a fixed set of carriers, as a consequence of which noise at a few particular frequencies can disturb the transfer of bit swap commands. Moreover, the AOC bytes constitute the start of the data contents of a Discrete Multi Tone symbol, as a result of which the AOC bytes are always modulated on the carriers carrying the least bits (tone or carrier ordering principle described in *section 6.7 of the above cited ANSI T1E1.413-1998 Spec).* Those tones are usually lying at the border of the ADSL passband and do suffer most from inter-symbol and inter-carrier interference (ISI/ICI), making the AOC overhead channel and the online reconfiguration process even more vulnerable to changing noise or line conditions.

An object of the present invention is to provide a mechanism and means for online reconfiguration in multi-carrier transceivers with increased reliability and robustness over the known bit swap technique.

According to the present invention, this object is realized by the method for reconfiguration as defined by claim 1, and the multi-carrier transceiver as defined by claim 7.

Indeed, the bit swap (bit and transmit energy reallocation) for the information channel can only be carried out reliably if the overhead channel conveying the bit swap commands has sufficient quality. If the loop quality degrades due to changing noise or line conditions, the first priority should therefore be to improve the quality of the overhead channel by reconfiguration of the overhead channel. Thus, the bit swap should first be applied to carriers that carry the data corresponding to the bit swap protocol. Only when these carriers have been successfully protected will further bit swap of the information bearing carriers be performed. Obviously, this may require repeated transmission of certain bit swap commands.

It is noted that the reconfiguration mechanism according to the current invention has the best effect when the bit swap commands, or more generally the overhead bytes, have a fixed position in the multi-carrier frame as a result of which these overhead bytes will be mapped onto a fixed set of carriers. For ADSL systems operating in compliance with the above cited ANSI T1E1.413-1998 or its ITU equivalent (ITU Specification G.992.1), this holds true. For ADSL systems operating in compliance with a more recent ITU Specification (ITU Specification G.992.3) this is not necessarily the case, but it can be imposed if during initialization of the latter ADSL system an integer relationship between the multi-carrier symbols (the so called DMT symbols) and the codewords (the so called Reed Solomon codewords) is negotiated.

It is further noted that the term 'comprising', used in the claims, should not be interpreted as being limitative to the means or steps listed thereafter. Thus, the scope of the expression 'a device comprising means A and B' should not be limited to devices consisting only of components A and B. It means that with respect to the present invention, the only relevant components of the device are A and B.

Additional, optional features of the online reconfiguration method according to the present invention are defined by claim 2.

Indeed, a typical implementation of the invented reconfiguration method is initiated by sending a request for reconfiguration. The request tells the other transceiver which carriers carrying overhead data have to be modified. The transceiver receiving the reconfiguration request, responds with an acknowledge message indicating the point in time from which the new configuration will take effect. Both transceivers thereupon prepare for the bitswap and at the appropriate time modify the bit assignment and/or the transmit energy assignment for the overhead data bearing carriers. It is evident however that tens of variant message sequences can be thought off leading to the same result, which is the reconfiguration of the overhead channel between two multi-carrier transceivers in order to make this overhead channel more reliable and more robust. Also, the contents of the messages could be different in variant implementations of the online configuration method according to the present invention.

Another optional feature of the online reconfiguration method according to the present invention is defined by claim 3.

Thus, the transceiver sending the request for reconfiguration of the overhead channel shall start a time-out period from the moment it sends the request. When no acknowledgement has been detected within this time-out interval, the transceiver shall re-send the request for reconfiguration with the same parameter values, and shall re-start the time-out period. Only when an acknowledgement has been detected within the time-out interval shall the transceiver prepare for reconfiguration of the overhead channel at the point in time indicated in the acknowledge message.

Further optional features of the online reconfiguration mechanism according to the current invention are defined by claim 4.

Hence, similar to the implementation of the overhead channel reconfiguration in claim 2, the information channel reconfiguration might be initiated by a request from one transceiver followed by an acknowledgement from the other transceiver. The request contains the parameters for the reconfiguration, e.g. the carrier indexes of information bearing carriers to be modified, as well as the amounts of bits to be reassigned and/or amounts of transmit energy to be assigned to the respective information bearing carriers. The acknowledge message informs on the time moment where the reconfiguration of the information channel shall take place.

Yet another optional feature of the online reconfiguration mechanism according to the present invention is defined in claim 5.

The current invention is suitable for implementation in various multi-carrier systems like Discrete Multi Tone (DMT) based multi-carrier systems such as ADSL (Asymmetric Digital Subscriber Line) or VDSL (Very High Speed Digital Subscriber Line) systems, OFDM based multi-carrier systems, DWMT based multi-carrier systems, etc.

Still an optional feature of the online reconfiguration mechanism according to the invention is defined by claim 6.

Thus, complementary to first reconfiguring the overhead channel before reconfiguring the information channel, the overhead channel can be better protected by assigning a signal to noise ratio margin to the overhead bearing tones which is larger than the signal to noise ratio margin assigned to the information bearing tones. This can be done either during initialization or at reconfiguration.

Thus, the request for reconfiguration of the information channel will repeatedly be sent out until an acknowledge message is received within a predetermined time-out interval. Only when the acknowledge message is received within the time-out interval, shall the multi-carrier transceivers prepare for the change in bit assignments and the transmit energy assignments for the information channel.

The above mentioned and other objects and features of the invention will become more apparent and the invention itself will be best understood by referring to the following description of an embodiment taken in conjunction with the accompanying drawings wherein:
Fig. 1 represents a time diagram of an embodiment of the online reconfiguration method according to the present invention;
Fig. 2 depicts in detail the contents of the overhead channel reconfiguration request messages of Fig. 1;
Fig. 3 depicts in detail the contents of the overhead channel reconfiguration acknowledge message of Fig. 1;
Fig. 4 depicts in detail the contents of the information channel reconfiguration request message of Fig. 1; and
Fig. 5 depicts in detail the contents of the information channel reconfiguration acknowledge message of Fig. 1.

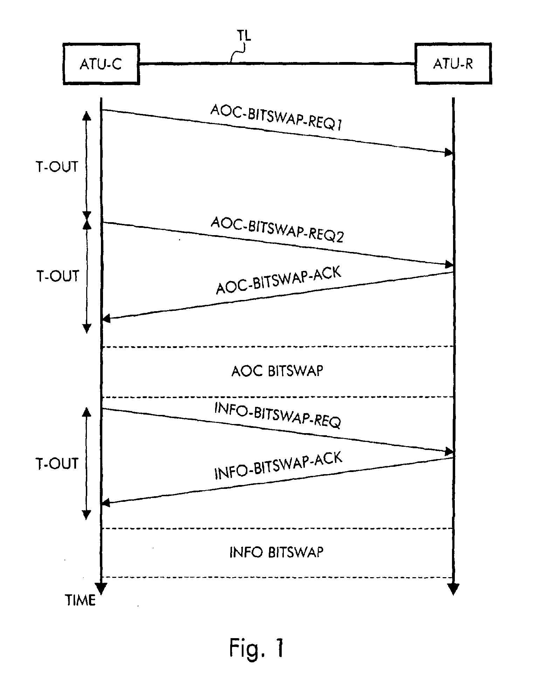

The time diagram of Fig. 1 shows a sample sequence of messages sent over the AOC channel between a central office ADSL transceiver ATU-C and a remote ADSL transceiver unit ATU-R in order to perform a bitswap operation in a manner according to the present invention. Both ADSL transceivers ATU-C and ATU-R are supposed to be DMT based ADSL transceivers communication over a twisted pair copper telephone loop TL. The transceivers thereto modulate information data and overhead data on a set of 256 carriers, part of which are used for downstream transmission from ATU-C to ATU-R, and part of which are used for upstream transmission from ATU-R to ATU-C.

The bit swap process enables the ADSL transceivers ATU-C and ATU-R to change the number of bits assigned to the carriers and/or to change the transmit energy of the carriers without interrupting the data flow. Either transceiver, ATU-C or ATU-R, may initiate a bitswap upon detection of changing noise or line conditions. The bit swap procedures for the upstream and downstream directions are independent, but may take place simultaneously.

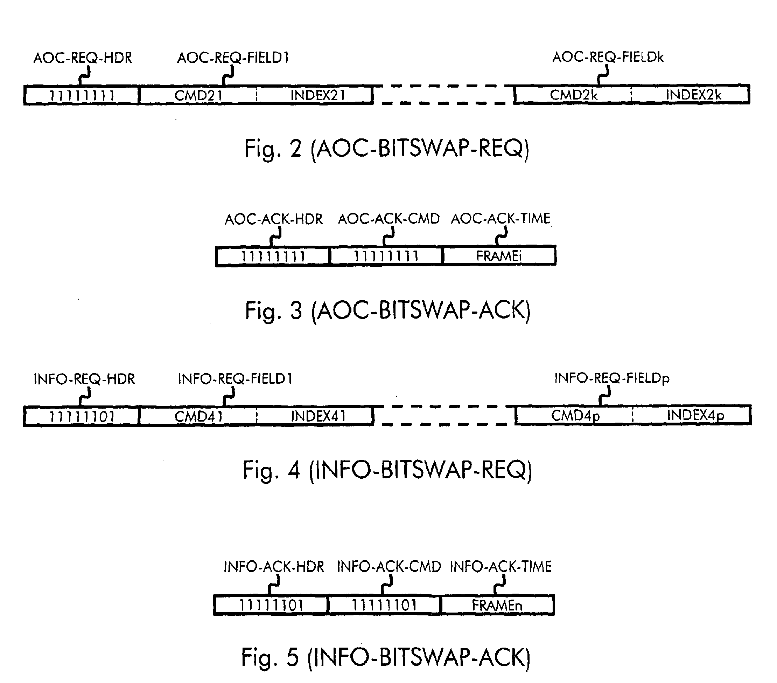

In the example scenario illustrated by Fig. 1, the central office ADSL transceiver ATU-C initiates the bitswap by sending an overhead bitswap request message AOC-BITSWAP-REQ1. This overhead bitswap request message AOC-BITSWAP-REQ1 consists of a message header AOC-REQ-HDR and k message fields, AOC-REQ-FIELD1 to AOC-REQ-FIELDk as shown in Fig. 2. The overhead bitswap request message header AOC-REQ-HDR consists of eight binary ones, whereas the k message fields AOC-REQ-FIELD1 to AOC-REQ-FIELDk each consist of an eight bit command, CMD21 to CMD2k, followed by an eight bit carrier index, INDEX21 to INDEX2k. The carrier indexes INDEX21 to INDEX2k correspond to indexes of tones that convey overhead channel data (AOC bits) and whose bit loading or transmit power has to be modified in order to improve the quality of the AOC channel given the changed noise or line conditions. The commands CMD21 to CMD2k specify for the respective tones how the bit and/or power allocation for that tone has to be modified. Valid commands and their meaning are supposed to be agreed upon beforehand between the transceivers ATU-C and ATU-R, or should be taken from a standardized table like *table 44 in section 10.2.3 of the ANSI T1E1.413-1998 Specification*.

The central office transceiver ATU-C starts a time out period T-OUT from the moment it sends the overhead bitswap request message AOC-BITSWAP-REQ1. It receives no acknowledgement within this time out interval and therefor resends a copy AOC-BITSWAP-REQ2 of the overhead bitswap request message AOC-BITSWAP-REQ1 with the same parameter values, and restarts the time out interval T-OUT. When no acknowledgement is received within the time out interval T-OUT after a finite number of unsuccessful retries, the central office ADSL transceiver ATU-C can take recovery actions.

In Fig. 2, the remote ADSL transceiver ATU-R responds to the second overhead bitswap request message AOC-BITSWAP-REQ2 with an overhead bitswap acknowledge message AOC-BITSWAP-ACK which arrives at the central office ADSL transceiver ATU-C before the time out interval T-OUT has expired. The overhead bitswap acknowledge message AOC-BITSWAP-ACK comprises a message header AOC-ACK-HDR and a single message field which consists of an eight bit acknowledge command AOC-ACK-CMD and an eight bit time field AOC-ACK-TIME. Both the message header AOC-ACK-HDR and the acknowledge command AOC-ACK-CMD are coded to contain eight binary ones. The time filed is included to indicate when the bit swap is to take place, and thereto contains a frame number FRAMEi. The new bit and/or power allocation for the overhead carrying tones shall take effect starting from the first frame of an ADSL superframe after the superframe counter has reached the number of FRAMEi. This way, the ADSL transceivers ATU-C and ATU-R can coordinate and synchronize the bit swapping. In ADSL, superframe counting is performed modulo 256 by both the central office transceiver and remote transceiver, starting with superframe 0 at the beginning of showtime. This way, the superframe counters in ATU-C and ATU-R remain synchronized and serve well as a tool to also synchronize the bitswap process. A skilled person however will appreciate that many alternatives exists to synchronize the bitswapping at two communicating multi-carrier transceivers, the selected method having an influence on the type of information to be conveyed in the acknowledge message (e.g. frame number, absolute or relative time against synchronized clocks available at ATU-C and ATU-R, ...).

Upon receipt of the overhead bitswap acknowledge message AOC-BITSWAP-ACK, the central office ADSL transceiver ATU-C in Fig. 2 waits until its superframe counter equals the value FRAMEi specified in time field AOC-ACK-TIME, and then starts the AOC BITSWAP by changing the overhead bit and power assignments for the appropriate carriers with indexes INDEX21 ... INDEX2k as specified in the commands CMD21 ... CMD2k. For example, CMD21 requires the number of overhead bits assigned to the tone with index INDEX21 to be increased by 1, ..., CMD2k requires the transmit energy allocated to the tone with index INDEX2k to be reduced by 2 dB. The remote transceiver ATU-R, after having sent the overhead bitswap acknowledge message AOC-BITSWAP-ACK, waits until its superframe counter has reached the value FRAMEi and then also carries out the AOC BITSWAP.

Thanks to the overhead bitswap, the robustness of the carriers that will convey the bitswap commands for the information channel reconfiguration has increased. It is possible that further overhead bitswap requests have to be sent before the entire overhead channel is sufficiently qualitative and reliable to continue with the online reconfiguration of the information channel. According to the invention, only when the carriers that carry the overhead data (AOC channel) or at least the carriers that carry the bit swap commands have been successfully protected, will further bit swap be performed. This may require repeated transmission of overhead bitswap request and acknowledge messages.

Once the overhead channel has been sufficiently protected, the central office ADSL transceiver ATU-C in Fig. 2 initiates the information channel bitswap by sending an information bitswap request message INFO-BITSWAP-REQ. This information bitswap request message INFO-BITSWAP-REQ comprises a message header INFO-REQ-HDR and a number of message fields, INFO-REQ-FIELD1 to INFO-REQ-FIELDp, each consisting of a bitswap command, CMD41 to CMD4p, and a carrier index, INDEX41 to INDEX4p, as illustrated by Fig. 4. The carrier indexes INDEX41 to INDEX4p point at tones that transport information bits and whose bit and/or energy constellation has to be adjusted as a result of the changed noise or line conditions. The bit swap commands CMD41 to CMD4p indicate how the bit and energy assignments of the respective carriers with indexes INDEX41 to INDEX4p have to be modified. The message header INFO-REQ-HDR serves the purpose of recognizing the kind of message at receiver side and is for instance coded with the eight bit sequence "11111101" (for the sake of clarity, this eight bit sequence is by example chosen different from the eight bit sequence used in the header of the overhead bitswap request message, but could have been chosen to contain exactly the same sequence "11111111" as well). From the moment on the information bitswap request message INFO-BITSWAP-REQ is sent, the central office transceiver ATU-C starts a time out interval T-OUT wherein it expects to receive acknowledgement. If no acknowledgement is received in time, a copy of the information bitswap request message INFO-BITSWAP REQ will be sent, and this can be repeated a finite number of times.

The remote ADSL transceiver ATU-R responds to the information bitswap request message INFO-BITSWAP-REQ with an information acknowledge message INFO-BITSWAP-ACK that contains a message header INFO-ACK-HDR, an acknowledge command INFO-ACK-CMD and a time field INFO-ACK-TINIE, as depicted in Fig. 5. The message header INFO-ACK-HDR and acknowledge command INFO-ACK-CMD are both coded to contain the eight bit sequence "11111101" (again, these eight bit codes are chosen different from the eight bit codes used in the corresponding fields of the overhead bitswap acknowledge message by example, but could have been chosen to contain exactly the same sequence "11111111" as well), whereas the time field INFO-ACK-TIME is filled with a frame number FRAMEn corresponding to the sequence number of the ADSL superframe from which onwards the information bit swap has to be applied.

The central office transceiver ATU-C receives the information bitswap acknowledge message INFO-BITSWAP-ACK within the time out period T-OUT, and starts waiting until its superframe counter equals the value FRAMEn. Beginning with the next ADSL superframe, the central office transceiver ATU-C will modify the bit and transmit energy assignments as specified in the information bitswap request message INFO-BITSWAP-REQ. For example, CMD41 may require to increase the transmit power of the tone with index INDEX41 by 3 dB, ..., CMD4p may require to decrease the amount of information bits assigned to the tone with index INDEX4p by 1.

Similarly, the remote ADSL transceiver ATU-R, upon transmission of the information bitswap acknowledge message INFO-BITSWAP-ACK, shall start waiting until its superframe counter has reached the number of FRAMEn, and shall then carry out the INFORMATION BITSWAP by modifying the bit and energy assignments to the information bearing carriers.

Depending on the loop quality degradation and the amount of carriers to be reconfigured, additional information bitswap request and acknowledge messages may have to be transmitted in order to improve the quality of the information channel between ATU-C and ATU-R to a satisfying level.

Complementary to the invention, the carriers that carry the overhead data could be extra protected during initialization or during one of the reconfiguration cycles by giving them extra signal-to-noise ratio margin with respect to the other tones. Current bit loading algorithms and bit swap protocols do not give special weight to the carriers that transport the reconfiguration commands. Implementing this feature would further enhance the chances that reconfiguration can be performed under severe noise constraints, and as a consequence further increases the stability of the multi-carrier system.

The above example describes in detail a bit swap procedure, i.e. online re-allocation of bits and power amongst the carriers. The basic principle of first improving the quality of the overhead channel conveying the reconfiguration messages before reconfiguring the information channel is however equally applicable to other types of online reconfiguration such as SRA or seamless rate adaptation (online reconfiguration of the aggregate data rate by modifying frame multiplexor control parameters as well as modifying the bits and gains parameters), DRR or dynamic rate repartitioning (online reconfiguration of the data rate allocation between multiple latency paths by modifying frame multiplexor parameters as well as modifying the bits and gains parameters), or even other types of online reconfiguration.

Also, the choice to describe the invented reconfiguration mechanism for the downstream direction, i.e. from ATU-C to ATU-R, is rather artificial. It is evident that the invention is equally applicable to the reverse direction, from ATU-R to ATU-C.

Although reference was made above to ADSL (Asymmetric Digital Subscriber Line) technology used for transmission over twisted pair telephone lines, any skilled person will appreciate that the present invention can be applied with same advantages in other DSL (Digital Subscriber Line) systems such as VDSL (Very High Speed Digital Subscriber Line), SDSL (Synchronous Digital Subscriber Line) systems, HDSL (High Speed Digital Subscriber Line) systems, and the like, or in a cable based, a fiber based or a radio based access system, where multi-carrier modulation techniques are used for transferring between two transceivers both an information channel and an overhead channel over a set of carriers or tones.

Furthermore, it is remarked that an embodiment of the present invention is described above rather in functional terms. From the functional description, it will be obvious for a person skilled in the art of designing hardware and/or software solutions for multi-carrier communications systems how embodiments of the invention can be manufactured.

While the principles of the invention have been described above in connection with specific apparatus, it is to be clearly understood that this description is made only by way of example and not as a limitation on the scope of the claims.

## Claims

1. Method for online reconfiguring in case of changing noise or line conditions the transfer of information channel data and overhead channel data, said overhead channel at least suited for conveying data reconfiguration messages between a first multi-carrier transceiver (ATU-C) and a second multi-carrier transceiver (ATU-R),
**CHARACTERIZED IN THAT** said method comprises the successive steps of:
a. first reconfiguring said overhead channel data successfully at the two communicating multi-carrier transceivers; and
b. thereafter reconfiguring said information channel data.

2. Method according to claim 1,
**CHARACTERIZED IN THAT** said step of reconfiguring said overhead channel data consists of:
a1. transmitting from said first multi-carrier transceiver (ATU-C) to said second multi-carrier transceiver (ATU-R) an overhead reconfiguration request message (AOC-BITSWAP-REQ1, AOC-BITSWAP-REQ2) informing said second multi-carrier transceiver (ATU-R) on carriers (INDEX21 ... INDEX2k) whose bit loading or transmit energy have to be modified for reconfiguration of said overhead channel data;
a2. transmitting from said second multi-carrier transceiver (ATU-R) to said first multi-carrier transceiver (ATU-C) an overhead reconfiguration acknowledge message (AOC-BITSWAP-ACK) informing said first multi-carrier transceiver (ATU-C) on the start time (FRAMEi) of said reconfiguration of said overhead channel data;
a3. modifying overhead data assignment and/or transmit energy assignment for said carriers (INDEX21 ... INDEX2k) at said first multi-carrier transceiver (ATU-C) and said second multi-carrier transceiver (ATU-R) from said start time (FRAMEi) onwards.

3. Method according to claim 2,
**CHARACTERIZED IN THAT** said step a1 is repetitively executed until said overhead reconfiguration acknowledge message (AOC-BITSWAP-ACK) is received by said first multi-carrier transceiver (ATU-C) within a predetermined time-out period (T-OUT) from transmitting said overhead reconfiguration request message (AOC-BITSWAP-REQ1, AOC-BITSWAP-REQ2).

4. Method according to claim 1,
**CHARACTERIZED IN THAT** said step of reconfiguring said information channel data consists of:
b1. transmitting from said first multi-carrier transceiver (ATU-C) to said second multi-carrier transceiver (ATU-R) an information reconfiguration request message (INFO-BITSWAP-REQ) informing said second multi-carrier transceiver (ATU-R) on carriers (INDEX41 ... INDEX4p) whose bit loading and/or transmit energy have to be modified for reconfiguration of said information channel data;
b2. transmitting from said second multi-carrier transceiver (ATU-R) to said first multi-carrier transceiver (ATU-C) an information reconfiguration acknowledge message (INFO-BITSWAP-ACK) informing said first multi-carrier transceiver (ATU-C) on the start time (FRAMEn) of said reconfiguration of said information channel data;
b3. modifying information data assignment and/or transmit energy assignment for said carriers (INDEX41 ... INDEX4p) at said first multi-carrier transceiver (ATU-C) and said second multi-carrier transceiver (ATU-R) from said start time (FRAMEn) onwards.

5. Method according to claim 4,
**CHARACTERIZED IN THAT** said step b1 is repetitively executed until said information reconfiguration acknowledge message (INFO-BITSWAP-ACK) is received by said first multi-carrier transceiver (ATU-C) within a predetermined time-out period (T-OUT) from transmitting said information reconfiguration request message (INFO-BITSWAP-REQ).

6. Method according to claim 1,
**CHARACTERIZED IN THAT** said overhead channel data are extra protected by assigning a signal to noise ratio margin to carriers conveying said overhead channel data that is higher than a signal to noise ratio margin assigned to carriers carrying said information channel data.

7. Multi-carrier transceiver (ATU-C) for transmitting and receiving an information channel and an overhead channel, said overhead channel at least suited for conveying data reconfiguration messages, said multi-carrier transceiver (ATU-C) containing reconfiguration means for online reconfiguring the transfer of information channel data and overhead channel data between said multi-carrier transceiver (ATU-C) and a second multi-carrier transceiver (ATU-R) in case of changing noise or line conditions,
**CHARACTERIZED IN THAT** said reconfiguration means are adapted to first reconfigure said overhead channel data successfully at the two communicating transceivers before reconfiguring said information channel data.

8. Multi-carrier transceiver according to claim 7,
**CHARACTERIZED IN THAT** said reconfiguration means are adapted to transceive reconfiguration messages (AOC-BITSWAP-REQ1, AOC-BITSWAP-REQ2, AOC-BITSWAP-ACK) for said overhead channel until said overhead channel data are successfully reconfigured, before reconfiguration messages (INFO-BITSWAP-REQ, INFO-BITSWAP-ACK) for said information channel are transceived.

9. Multi-carrier transceiver (ATU-C) according to claim 7,
**CHARACTERIZED IN THAT** said multi-carrier transceiver (ATU-C) is a Discrete Multi Tone transceiver.

10. Multi-carrier transceiver (ATU-C) according to claim 9,
**CHARACTERIZED IN THAT** said multi-carrier transceiver (ATU-C) is a Digital Subscribe Line (DSL) transceiver, and said reconfiguration messages are bit swap request and acknowledge messages.

## Revendications

1. Procédé destiné à la reconfiguration en ligne, en cas de changement des conditions de bruit ou de ligne, des données du canal de transfert d'informations et des données du canal de surdébit, ledit canal de surdébit convenant au moins pour acheminer des messages de reconfiguration de données, entre un premier émetteur-récepteur à plusieurs porteuses (ATU-C) et un deuxième émetteur-récepteur à plusieurs porteuses (ATU-R),
**caractérisé en ce que** ledit procédé comprend les étapes successives :
a. en premier, de reconfigurer avec succès lesdites données du canal de surdébit au niveau des deux émetteurs-récepteurs à plusieurs porteuses communiquant, et
b. après cela, de reconfigurer lesdites données du canal de transfert d'informations.

2. Procédé selon la revendication 1,
**caractérisé en ce que** ladite étape de reconfigurer lesdites données du canal de surdébit consistent à :
a1. transmettre dudit premier émetteur-récepteur à plusieurs porteuses (ATU-C) au dit deuxième émetteur-récepteur à plusieurs porteuses (ATU-R) un message de requête de reconfiguration de surdébit (AOC-BITSWAP-REQ1, AOC-BITSWAP-REQ2) informant ledit deuxième émetteur-récepteur à plusieurs porteuses (ATU-R) sur des porteuses (INDEX21 ... INDEX2k) dont le chargement des bits ou l'énergie d'émission doit être modifié pour reconfigurer lesdites données du canal de surdébit ;
a2. transmettre dudit deuxième émetteur-récepteur à plusieurs porteuses (ATU-R) au dit premier émetteur-récepteur à plusieurs porteuses (ATU-C) un message d'acquittement de reconfiguration de surdébit (AOC-BITSWAP-ACK) informant ledit premier émetteur-récepteur à plusieurs porteuses (ATU-C) sur le temps de démarrage (FRAMEi) de ladite reconfiguration desdites données du canal dé surdébit ;
a3. modifier l'attribution des données de surdébit et/ou l'attribution d'énergie d'émission pour lesdites porteuses (INDEX21 ... INDEX2k) au niveau dudit premier émetteur-récepteur à plusieurs porteuses (ATU-C) et dudit deuxième émetteur-récepteur à plusieurs porteuses (ATU-R) à partir dudit temps de démarrage (FRAMEi).

3. Procédé selon la revendication 2,
**caractérisé en ce que** ladite étape a1 est exécutée de manière répétitive jusqu'à ce que ledit message d'acquittement de reconfiguration de surdébit (AOC-BITSWAP-ACK) soit reçu par ledit premier émetteur-récepteur à plusieurs porteuses (ATU-C) dans une période de temporisation prédéterminée (T-OUT) à partir de la transmission dudit message de requête de reconfiguration de surdébit (AOC-BITSWAP-REQ1, AOC-BITSWAP-REQ2).

4. Procédé selon la revendication 1,
**caractérisé en ce que** ladite étape de reconfigurer lesdites données du canal de transfert d'informations consistent à :
b1. transmettre dudit premier émetteur-récepteur à plusieurs porteuses (ATU-C) au dit deuxième émetteur-récepteur à plusieurs porteuses (ATU-R) un message de requête de reconfiguration d'informations (INFO-BITSWAP-REQ) informant ledit deuxième émetteur-récepteur à plusieurs porteuses (ATU-R) sur des porteuses (INDEX41 ... INDEX4p) dont le chargement des bits et/ou l'énergie d'émission doivent être modifiés pour reconfigurer lesdites données du canal de transfert d'informations ;
b2. transmettre dudit deuxième émetteur-récepteur à plusieurs porteuses (ATU-R) au dit premier émetteur-récepteur à plusieurs porteuses (ATU-C) un message d'acquittement de reconfiguration d'informations (INFO-BITSWAP-ACK) informant ledit premier émetteur-récepteur à plusieurs porteuses (ATU-C) sur le temps de démarrage (FRAMEn) de ladite reconfiguration desdites données du canal de transfert d'informations ;
b3. modifier l'attribution des données d'informations et/ou l'attribution d'énergie d'émission pour lesdites porteuses (INDEX41 ... INDEX4p) au niveau dudit premier émetteur-récepteur à plusieurs porteuses (ATU-C) et dudit deuxième émetteur-récepteur à plusieurs porteuses (ATU-R) à partir dudit temps de démarrage (FRAMEn).

5. Procédé selon la revendication 4,
**caractérisé en ce que** ladite étape b1 est exécutée de manière répétitive jusqu'à ce que ledit message d'acquittement de reconfiguration d'informations (INFO-BITSWAP-ACK) soit reçu par ledit premier émetteur-récepteur à plusieurs porteuses (ATU-C) dans une période de temporisation prédéterminée (T-OUT) à partir de la transmission dudit message de requête de reconfiguration d'informations (INFO-BITSWAP-REQ).

6. Procédé selon la revendication 1,
**caractérisé en ce que** lesdites données du canal de surdébit sont protégées d'une manière supplémentaire en attribuant aux porteuses acheminant lesdites données du canal de surdébit une marge de rapport signal sur bruit qui est supérieure à une marge de rapport signal sur bruit attribuée aux porteuses portant lesdites données du canal de transfert d'informations.

7. Émetteur-récepteur à plusieurs porteuses (ATU-C) destiné à transmettre et recevoir un canal de transfert d'informations et un canal de surdébit, ledit canal de surdébit convenant au moins pour acheminer des messages de reconfiguration de données, ledit émetteur-récepteur à plusieurs porteuses (ATU-C) contenant des moyens de reconfiguration destinés à reconfigurer en ligne des données du canal de transfert d'informations et des données du canal de surdébit entre ledit émetteur-récepteur à plusieurs porteuses (ATU-C) et un deuxième émetteur-récepteur à plusieurs porteuses (ATU-R) en cas de changement des conditions de bruit ou de ligne,
**caractérisé en ce que** lesdits moyens de reconfiguration sont adaptés pour reconfigurer en premier lesdites données du canal de surdébit avec succès au niveau des deux émetteurs-récepteurs en communication avant de reconfigurer lesdites données du canal de transfert d'informations.

8. Émetteur-récepteur à plusieurs porteuses selon la revendication 7,
**caractérisé en ce que** lesdits moyens de reconfiguration sont adaptés pour émettre et recevoir des messages de reconfiguration (AOC-BITSWAP-REQ1, AOC-BITSWAP-REQ2, AOC-BITSWAP-ACK) pour ledit canal de surdébit jusqu'à ce que lesdites données du canal de surdébit soient reconfigurées avec succès, avant que soient émis et reçus des messages de reconfiguration (INFO-BITSWAP-REQ, INFO-BITSWAP-ACK) pour ledit canal de transfert d'informations.

9. Émetteur-récepteur à plusieurs porteuses (ATU-C) selon la revendication 7, **caractérisé en ce que** ledit émetteur-récepteur à plusieurs porteuses (ATU-C) est un émetteur-récepteur DMT (code à multitonalité discrète).

10. Émetteur-récepteur à plusieurs porteuses (ATU-C) selon la revendication 9, **caractérisé en ce que** ledit émetteur-récepteur à plusieurs porteuses (ATU-C) est un émetteur-récepteur DSL (liaison d'abonné numérique), et lesdits messages de reconfiguration sont des demandes de transfert de bits et des messages d'acquittement.

## Patentansprüche

1. Verfahren, um im Fall sich ändernder Störungs- oder Leitungsbedingungen die Übertragung von Informationskanal-Daten und Kopfinformations-Kanal-Daten zwischen einem ersten Mehrträger-Sender/Empfänger (ATU-C) und einem zweiten Mehrträger-Sender/Empfänger (ATU-R) online neu zu konfigurieren, wobei der Kopfinformations-Kanal mindestens dazu geeignet ist, Daten-Neukonfigurations-Nachrichten zu übertragen,
**DADURCH GEKENNZEICHNET, DASS** das Verfahren folgende sukzessive Schritte umfasst:
a. Zuerst erfolgreiche Neukonfiguration der Kopfinformations-Kanal-Daten in den beiden kommunizierenden Mehrträger-Sendern/Empfängern, und
b. Danach Neukonfiguration der Informationskanal-Daten.

2. Verfahren gemäß Anspruch 1,
**DADURCH GEKENNZEICHNET, DASS** der Schritt der Neukonfiguration der Kopfinformations-Kanal-Daten folgendes umfasst:
a1. Von dem ersten Mehrträger-Sender/Empfänger (ATU-C) zum zweiten Mehrträger-Sender/Empfänger (ATU-R) Senden einer Kopfinformations-Neukonfigurations-Anforderungs-Nachricht (AOC-BITSWAP-REQ1, AOC-BITSWAP-REQ2), die den zweiten Mehrträger-Sender/Empfänger (ATU-R) über Träger (INDEX21 ... INDEX2k) informiert, deren Bitbelastung oder Sendeenergie zur Neukonfiguration der Kopfinformations-Kanal-Daten geändert werden müssen;
a2. Von dem zweiten Mehrträger-Sender/Empfänger (ATU-R) zum ersten Mehrträger-Sender/Empfänger (ATU-C) Senden einer Kopfinformations-Neukonfigurations-Quittungs-Nachricht (AOC-BITSWAP-ACK), die den ersten Mehrträger-Sender/Empfänger (ATU-C) über die Startzeit (FRAMEi) der Neukonfiguration der Kopfinformations-Kanal-Daten informiert;
a3. Änderung der Kopfinformations-Daten-Zuordnung und/oder der Sendeenergie-Zuordnung für die Träger (INDEX21 ... INDEX2k) in dem ersten Mehrträger-Sender/Empfänger (ATU-C) und dem zweiten Mehrträger-Sender/Empfänger (ATU-R) ab dem Startzeitpunkt (FRAMEi).

3. Verfahren gemäß Anspruch 2,
**DADURCH GEKENNZEICHNET, DASS** der Schritt a1 wiederholt ausgeführt wird, bis die Kopfinformations-Neukonfigurations-Quittungs-Nachricht (AOC-BITSWAP-ACK) vom ersten Mehrträger-Sender/Empfänger (ATU-C) innerhalb einer vorher festgelegten Timeout-Periode (T-OUT) vom Senden der Kopfinformations-Neukonfigurations-Anforderungs-Nachricht (AOC-BITSWAP-REQ1, AOC-BITSWAP-REQ2) empfangen wird.

4. Verfahren gemäß Anspruch 1,
**DADURCH GEKENNZEICHNET, DASS** der Schritt der Neukonfiguration der Informationskanal-Daten folgendes umfasst:
b1. Von dem ersten Mehrträger-Sender/Empfänger (ATU-C) zum zweiten Mehrträger-Sender/Empfänger (ATU-R) Senden einer Informations-Neukonfigurations-Anforderungs-Nachricht (INFO-BITSWAP-REQ), die den zweiten Mehrträger-Sender/Empfänger (ATU-R) über Träger (INDEX41 ... INDEX4p) informiert, deren Bitbelastung und/oder Sendeenergie zur Neukonfiguration der Informationskanal-Daten geändert werden müssen;
b2. Von dem zweiten Mehrträger-Sender/Empfänger (ATU-R) zum ersten Mehrträger-Sender/Empfänger (ATU-C) Senden einer Informations-Neukonfigurations-Quittungs-Nachricht (INFO-BITSWAP-ACK), die den ersten Mehrträger-Sender/Empfänger (ATU-C) über die Startzeit (FRAMEn) der Neukonfiguration der Informationskanal-Daten informiert;
b3. Änderung der Informationsdaten-Zuordnung und/oder der Sendeenergie-Zuordnung für die Träger (INDEX41 ... INDEX4p) in dem ersten Mehrträger-Sender/Empfänger (ATU-C) und dem zweiten Mehrträger-Sender/Empfänger (ATU-R) ab dem Startzeitpunkt (FRAMEn).

5. Verfahren gemäß Anspruch 4,
**DADURCH GEKENNZEICHNET, DASS** der Schritt b1 wiederholt ausgeführt wird, bis die Informations-Neukonfigurations-Quittungs-Nachricht (INFO-BITSWAP-ACK) vom ersten Mehrträger-Sender/Empfänger (ATU-C) innerhalb einer vorher festgelegten Timeout-Periode (T-OUT) vom Senden der Informations-Neukonfigurations-Anforderungs-Nachricht (INFO-BITSWAP-REQ) empfangen wird.

6. Verfahren gemäß Anspruch 1,
**DADURCH GEKENNZEICHNET, DASS** die Kopfinformations-Kanal-Daten zusätzlich **dadurch** geschützt sind, dass Trägern, welche die Kopfinformations-Kanal-Daten übertragen, eine Signal-Rauschverhältnis-Grenze zugeordnet wird, die höher ist als die Signal-Rauschverhältnis-Grenze, die Trägern zugeordnet wird, welche die Informationskanal-Daten übertragen.

7. Mehrträger-Sender/Empfänger (ATU-C) zum Senden und Empfangen eines Informationskanals und eines Kopfinformations-Kanals, wobei der Kopfinformations-Kanal mindestens dazu geeignet ist, Daten-Neukonfigurations-Nachrichten zu übertragen, und der Mehrträger-Sender/Empfänger (ATU-C) Neukonfigurations-Mittel enthält, um im Fall sich ändernder Störungs- oder Leitungsbedingungen die Übertragung von Informationskanal-Daten und Kopfinformations-Kanal-Daten zwischen dem Mehrträger-Sender/Empfänger (ATU-C) und einem zweiten Mehrträger-Sender/Empfänger (ATU-R) Online neu zu konfigurieren,
**DADURCH GEKENNZEICHNET, DASS** die Neukonfigurations-Mittel so angepasst sind, dass sie zuerst eine erfolgreiche Neukonfiguration der Kopfinformations-Kanal-Daten in den beiden kommunizierenden Sendern/Empfängern durchführen, bevor sie die Informationskanal-Daten neu konfigurieren.

8. Mehrträger-Sender/Empfänger gemäß Anspruch 7,
**DADURCH GEKENNZEICHNET, DASS** die Neukonfigurations-Mittel so angepasst sind, dass sie Neukonfigurations-Nachrichten (AOC-BITSWAP-REQ1, AOC-BITSWAP-REQ2, AOC-BITSWAP-ACK) für den Kopfinformations-Kanal senden/empfangen, bis die Kopfinformations-Kanal-Daten erfolgreich neu konfiguriert wurden, bevor Neukonfigurations-Nachrichten (INFO-BITSWAP-REQ INFO-BITSWAP-ACK) für den Informationskanal gesendet/empfangen werden.

9. Mehrträger-Sender/Empfänger (ATU-C) gemäß Anspruch 7,
**DADURCH GEKENNZEICHNET, DASS** der Mehrträger-Sender/Empfänger (ATU-C) ein Discrete Multitone Sender/Empfänger ist.

10. Mehrträger-Sender/Empfänger (ATU-C) gemäß Anspruch 9,
**DADURCH GEKENNZEICHNET, DASS** der Mehrträger-Sender/Empfänger (ATU-C) ein Digital Subscriber Line (DSL) Sender/Empfänger ist und die Neukonfigurations-Nachrichten Bitswap-Anforderungs- und Quittungs-Nachrichten sind.
